(19) Europäisches Patentamt / European Patent Office / Office européen des brevets

(11) **EP 3 707 350 B1**

## (12) FASCICULE DE BREVET EUROPEEN

(45) Date de publication et mention de la délivrance du brevet:
**26.01.2022 Bulletin 2022/04**

(21) Numéro de dépôt: **18833487.4**

(22) Date de dépôt: **17.12.2018**

(51) Classification Internationale des Brevets (IPC):
**F01D 25/18** (2006.01)  **F02C 7/06** (2006.01)
**F01M 11/06** (2006.01)  **F16N 19/00** (2006.01)

(52) Classification Coopérative des Brevets (CPC):
**F02C 7/06; F01D 25/18; F01M 11/061;**
**F16N 19/006;** F05D 2260/80; F05D 2260/84;
F16N 2210/08

(86) Numéro de dépôt international:
**PCT/FR2018/053336**

(87) Numéro de publication internationale:
**WO 2019/122658 (27.06.2019 Gazette 2019/26)**

(54) **DISPOSITIF D'ALIMENTATION D'UN RÉSERVOIR D'HUILE Á PARTIR D'UN SECOND RÉSERVOIR**

VORRICHTUNG ZUR VERSORGUNG EINES ÖLTANKS AUS EINEM ZWEITEN TANK

DEVICE FOR SUPPLYING AN OIL TANK FROM A SECOND TANK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2017 FR 1762603**

(43) Date de publication de la demande:
**16.09.2020 Bulletin 2020/38**

(73) Titulaire: **SAFRAN AIRCRAFT ENGINES**
**75015 Paris (FR)**

(72) Inventeurs:
• **DUPAYS, Clément**
**77550 Moissy-Cramayel (FR)**
• **SANTIN, Mathieu, Jean, Jacques**
**77550 Moissy-Cramayel (FR)**
• **FRANTZ, Caroline, Marie**
**77550 Moissy-Cramayel (FR)**
• **GAILLOT-DREVON, Benoît**
**77550 Moissy-Cramayel (FR)**

(74) Mandataire: **Brevalex**
**95, rue d'Amsterdam**
**75378 Paris Cedex 8 (FR)**

(56) Documents cités:
FR-A1- 3 013 330     FR-A1- 3 020 093
US-A- 4 012 012

EP 3 707 350 B1

**Description**

Le sujet de l'invention est un dispositif, prévu pour un moteur d'aéronef, d'alimentation d'un réservoir en huile par un second réservoir.

Certains avions comportent un dispositif permettant l'alimentation de réservoirs d'huile adjacents aux moteurs et assurant leur lubrification par de l'huile originaire d'un second réservoir, situé ailleurs dans l'avion, généralement commun à tous les moteurs et relié aux réservoirs des moteurs par des dispositifs respectifs comprenant un conduit d'alimentation, une pompe, et un moyen de commande à fonctionnement automatique ou commandé par un opérateur; la commande peut être continue ou par impulsions, à chacune desquelles une dose d'huile déterminée est supposée être délivrée.

De tels dispositifs, souvent appelés ORRS (« Oil Remote Replenishing System »), permettent d'éviter de devoir vérifier visuellement les niveaux d'huile dans les réservoirs des moteurs, ainsi que les remplissages manuels, et ils offrent donc une meilleure commodité, puisqu'il devient inutile d'ouvrir les nacelles contenant les moteurs et leurs réservoirs, en devant notamment recourir à une échelle ou un escabeau.

Il convient d'éviter aussi bien les sous-remplissages du réservoir, qui interrompraient la lubrification correcte, que les sur-remplissages qui sont eux aussi nuisibles au bon fonctionnement des moteurs. Le dispositif de commande est donc renseigné par une sonde évaluant le niveau d'huile à l'intérieur de chaque réservoir du moteur et permettant d'évaluer des doses d'alimentation convenables, c'est-à-dire la durée d'actionnement de la pompe ou le nombre de ses impulsions de fonctionnement. Les sondes souvent utilisées dans la pratique sont à flotteur magnétique coulissant sur une colonne verticale et commandant la commutation de relais disposés en rangée devant la colonne. Ces sondes, présentées comme robustes et fiables, sont néanmoins sujettes à des dérives de mesure aptes à provoquer un mauvais remplissage et la venue d'une des situations proscrites (niveau d'huile trop haut ou niveau trop bas) mentionnées ci-dessus, sans que l'opérateur ait la possibilité de s'en apercevoir autrement que par une fastidieuse inspection visuelle dans la nacelle.

Dans le document FR 3 013 330 A, on décrit un dispositif d'aéronef dans lequel les réservoirs de moteur sont remplacés par un réservoir commun qui alimente chacun des moteurs. Il est à noter que les réservoirs présents dans les nacelles sont supposés être complètement éliminés. Si l'avantage d'éviter des inspections ou des interventions trop fréquentes dans les nacelles est obtenu, il n'est nullement évident que des doses convenables d'huile soient délivrées. Le document mentionne que le réservoir central est muni d'une jauge de niveau d'huile dont les informations peuvent être transmises aux électroniques de commande des moteurs. Il est plausible de penser que des doses exigées par ces électroniques sont délivrées à chacun des moteurs; mais l'adéquation aux besoins réels n'est pas garantie, si par exemple la sonde est défectueuse, les besoins en huile ont été mal estimés, ou une fuite d'huile est présente le long des conduits d'acheminement.

Et le document FR 3 020 093 A1 décrit un dispositif à deux réservoirs reliés entre eux, dont l'un est muni d'une sonde de niveau permettant de commander l'ouverture d'une vanne qui permet le remplissage du réservoir par le contenu de l'autre réservoir.

Sous une forme générale, un aspect de l'invention est un dispositif comprenant un premier réservoir d'huile adjacent à un moteur de propulsion de l'aéronef, un second réservoir d'huile distinct du moteur, un système d'alimentation du premier réservoir par de l'huile extraite du second réservoir, une première sonde de niveau d'huile dans le premier réservoir, une unité de commande du système d'alimentation, sensible à des mesures de la première sonde, caractérisé en ce qu'il comprend une unité d'estimation et de comparaison de doses d'huile extraites du second réservoir et de doses d'huile reçues par le premier réservoir.

Ce dispositif peut être exploité par le procédé suivant. Tant que l'estimation des doses d'huile extraites du second réservoir concorde assez bien avec les mesures de quantité de remplissage du premier réservoir, le dispositif est supposé fonctionner correctement : il est inutile de se livrer à des inspections de routine des réservoirs et notamment du premier d'entre eux; dans le cas contraire, le dispositif révèle une détérioration pouvant porter soit sur la sonde du premier réservoir, soit sur l'intégrité du dispositif d'alimentation, parmi des causes potentielles importantes. Une alerte peut alors être donnée.

L'estimation des doses d'huile délivrée par le second réservoir peut être faite de plusieurs manières : soit par un calcul fondé sur une multiplication du nombre d'impulsions de délivrance d'huile, en supposant que la quantité fournie à chaque impulsion de pompage est connue est invariable ; ou encore, par une sonde équipant le second réservoir et pouvant éventuellement et avantageusement être une sonde de niveau de genre semblable à celle du premier réservoir. Dans ce dernier cas, les sondes peuvent être toutes deux à flotteur magnétique et rangée d'interrupteurs se succédant le long d'une ligne verticale de mouvement du flotteur.

Un autre aspect de l'invention est un aéronef auquel ce dispositif est intégré.

Le second réservoir peut alors être un réservoir unique placé dans une carlingue de l'aéronef, le premier réservoir et le système d'alimentation existant à plusieurs exemplaires sur des côtés de l'aéronef, aux endroits où sont situés les moteurs, notamment sous les ailes.

Quant au dispositif d'alerte, il est envisagé, s'il existe, de le placer à un tableau de bord d'un poste de pilotage de l'aéronef.

L'invention sera maintenant expliquée plus en détails à l'aide des figures suivantes, qui en illustrent une réalisation donnée à titre purement illustratif :

- la figure 1 illustre un dispositif connu ;
- la figure 2 représente de façon plus concrète le second réservoir ou réservoir d'avion;
- la figure 3 représente un dispositif complet, où le second réservoir dessert plusieurs premiers réservoirs ;
- la figure 4 représente un réservoir d'huile ;
- la figure 5 représente une sonde de niveau ;
- les figures 6 et 7 montrent deux états de fonctionnement de la sonde ;
- la figure 8 représente des signaux de sortie, corrects ou non, de la sonde ;
- et les figures 9 et 10 illustrent deux réalisations possibles de l'invention.

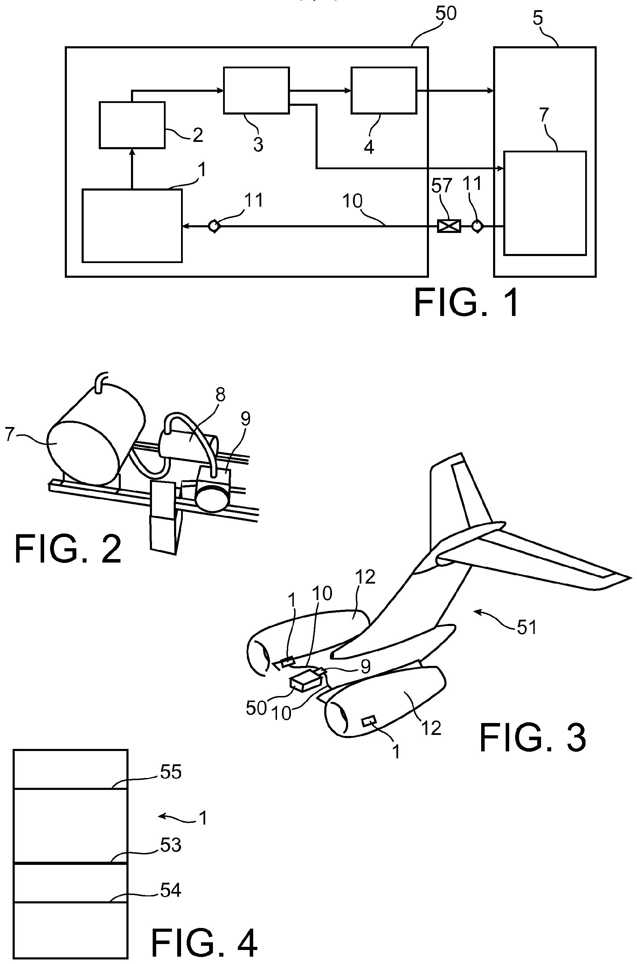

La figure 1 illustre schématiquement un dispositif connu. Un réservoir de moteur 1 est muni d'une sonde 2 de niveau d'huile, qui communique ses mesures à une unité d'acquisition 3. Quand cette dernière juge le niveau d'huile insuffisant, elle envoie un signal à une unité de demande de correction 4 qui fait intervenir un système d'alimentation 5. Le système d'alimentation 5 comprend un réservoir d'avion 7 (figure 2) muni d'une pompe 8 électrique et, en aval de celle-ci, une vanne de commutation 9 par laquelle le réservoir d'avion 7 peut alimenter le réservoir de moteur 1 en huile en ouvrant un conduit d'alimentation 10 qui les relie, cette conduite d'alimentation 10 étant munie de clapets anti-retour 11 aux bornes des réservoirs 1 et 7. Comme le montre la figure 3, un réservoir de moteur 1 est présent sur chacun des moteurs 12 d'un avion 51 représenté seulement partiellement et desservi par un conduit d'alimentation 10 particulier, et la vanne de commutation 9 permet de choisir tour à tour celui des conduits d'alimentation 10 à ouvrir et celui des réservoirs de moteur 1 à alimenter. Le système d'alimentation 5 commun aux différents moteurs 12 et réservoirs de moteur 1 est placé dans la carlingue de l'avion 51. Le second réservoir 7 est en général muni d'une jauge visuelle de niveau d'huile. La vérification de son remplissage se fait au cours d'entretiens entre vols successifs. Quand le remplissage est effectué et que la sonde 2 indique un niveau suffisant, l'unité d'acquisition 3 l'indique au système d'alimentation 5, qui interrompt le fonctionnement de la pompe 8. En variante, les commandes peuvent être effectuées par l'intermédiaire d'un opérateur. Le réservoir de moteur 1, la sonde 2, l'unité d'acquisition 3 et l'unité de commande de correction 4 sont situés dans un système de puissance intégré (IPPS) 50, éloigné de l'avion 51, et les communications se font préférablement par fil, de façon analogique ou numérique, par exemple à l'aide d'un bus de données de type ARINC.

La figure 4 schématise la nécessité de maintenir un niveau 53 d'huile entre une limite inférieure 54 et une limite supérieure 55 à l'intérieur de chaque réservoir de moteur 1, afin d'éviter à la fois un défaut de lubrification dans le moteur 12 et un remplissage excessif, le sommet du réservoir 1 étant un volume d'aération et d'expansion de l'huile qui doit rester libre. Des dérives de la sonde 2 qui aboutiraient soit à surestimer soit à sous-estimer la quantité d'huile et la hauteur du niveau 53 doivent donc être toutes deux évitées.

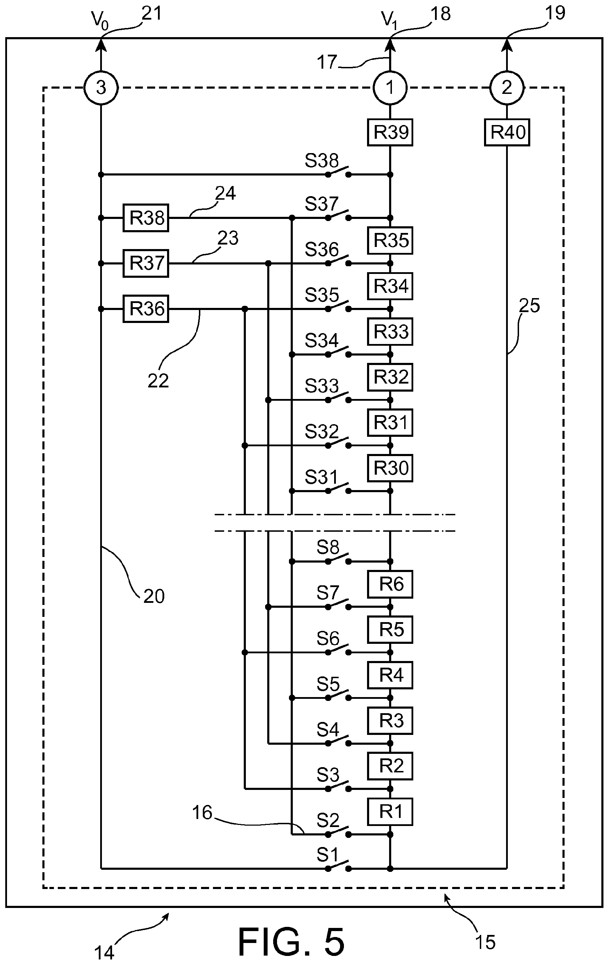

Un genre de sonde de niveau fréquemment rencontré dans ce domaine est une sonde à flotteur magnétique, comprenant, comme le montre la figure 5, un circuit électrique 14 comprenant une rangée d'interrupteurs 15 notés S1 à S38, ouverts au repos et dont chacun est relié par une liaison électrique 16 à une ligne d'alimentation 17, (menant à une borne d'alimentation 18 d'un côté, et à une borne de masse 19 par l'intermédiaire d'une ligne de retour 25 de l'autre côté), et à une ligne de signal 20 menant à une borne de signal 21. Les liaisons électriques 16 sont regroupées en trois faisceaux 22, 23 et 24 avant d'atteindre la ligne de signal 20, selon un dispositif régulier dans lequel les interrupteurs 15 notés S2, S5, S8, ..., S35 aboutissent à un premier faisceau 22, les interrupteurs 15 suivants notés S3, S6, S9, ..., S36 à un second faisceau 23, et les autres interrupteurs 15 notés S4, S7, S10, ..., S37 à un troisième faisceau 24. Les interrupteurs 15 extrêmes notés S1 et S38 font toutefois exception en étant reliés directement et individuellement à la ligne de signal 20. Des résistances R1, R2, R3, ..., R35 sont présentes sur la ligne d'alimentation 17 entre chaque liaison 16 pour les interrupteurs 15 notés S2 à S37 ; d'autres résistances R36 à R38 sont présentes respectivement sur les faisceaux 22, 23 et 24 ; et des résistances R39 et R40 sont présentes respectivement sur la ligne d'alimentation 17 entre la borne d'alimentation 18 et l'interrupteur 15 noté S38 qui est le plus proche d'elle, et sur la ligne de retour 25.

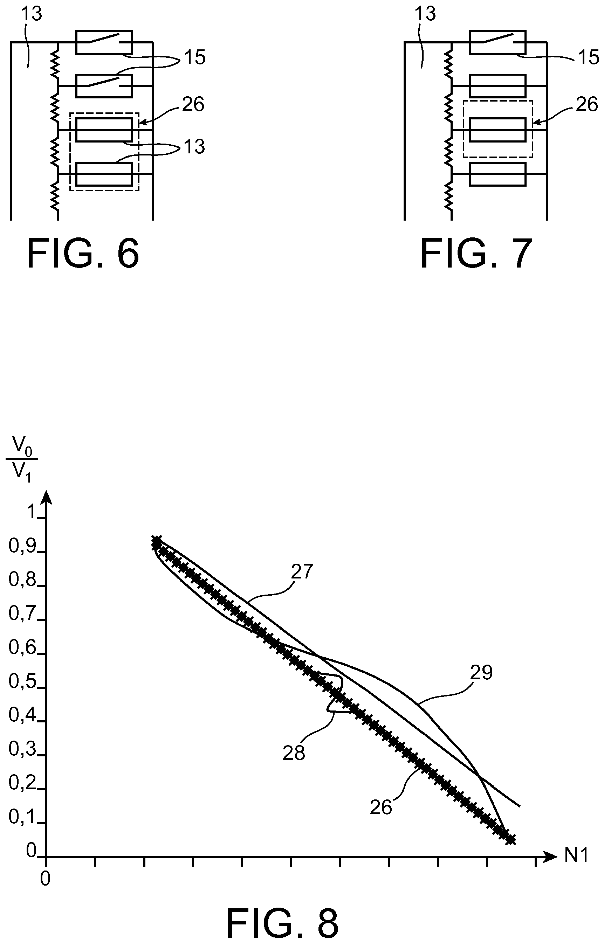

La sonde 2 est complétée par un flotteur magnétique 26, représenté aux figures 6 et 7, et qui est apte à fermer soit deux interrupteurs 15 consécutifs, soit trois interrupteurs 15 consécutifs suivant sa hauteur. Le flotteur magnétique 26 est pour cela placé dans une jambe verticale du réservoir 1 de manière à y pouvoir coulisser, cette jambe étant placée devant le circuit électrique 14, et le flotteur magnétique 26 venant donc en face de la rangée d'interrupteurs 15 en suivant les variations du niveau d'huile 53.

La hauteur du flotteur magnétique 26 peut être déduite par le rapport entre les tensions V0 et V1 respectivement présentes à la borne de signal 21 et à la borne d'alimentation 18 par rapport à la borne de masse 19, selon (par exemple) la formule suivante :

$$V_0 = V_1 \frac{(R3 + R2 + R1 + R40) + 1/2(R5 + R4)}{(\sum_{n=1}^{35} Rn + R39 + R40)}$$

si, le flotteur magnétique 26 ferme les interrupteurs 15 notés S5, S6 et S7. La fonction théorique donnant le niveau 53 d'huile en fonction du rapport V0/V1 est linéaire et donnée à la figure 8.

La sonde 2 est toutefois sujette à des dégradations de ses constituants, qui se répercutent par des dérives sur les mesures. Les origines de ces dégradations peuvent être dues à des vieillissements produits par des cycles thermiques ou mécaniques, des vibrations, de la fatigue ou de l'altération chimique, entre autres. Les principales dégradations qu'on peut envisager concernent les connexions à l'endroit des bornes, l'apparition de résistances supplémentaires ou l'augmentation de résistances sur les lignes électriques, ou le blocage ou le court-circuit de certains des interrupteurs 15. Une situation extrême est le blocage du flotteur magnétique 26 à une hauteur fixe. Si la courbe 52 (rectiligne) de la figure 8 représente le signal résultant d'un fonctionnement correct de la sonde 2, les courbes 27, 28 et 29 consistant en une pente différente, en une perturbation locale de type oscillatoire, et une perturbation consistant en une sous-estimation du signal à réservoir peu empli et une sur-estimation de ce signal quand le réservoir est plus empli, peuvent apparaître. Ces fonctions perturbées correspondent respectivement à une résistance supplémentaire sur la ligne de retour 25, un interrupteur 15 restant ouvert et exerçant sa perturbation seulement quand le flotteur magnétique 26 passe devant lui, et un court-circuit d'une résistance entre deux des interrupteurs 15. D'autres fonctions perturbées peuvent être rencontrées, mais toutes ont la caractéristique, utile à la bonne exécution de l'invention, que ces perturbations par rapport à la fonction de signal normale (de la courbe 52) ont des intensités différentes le long de cette fonction, selon donc le degré de remplissage du réservoir.

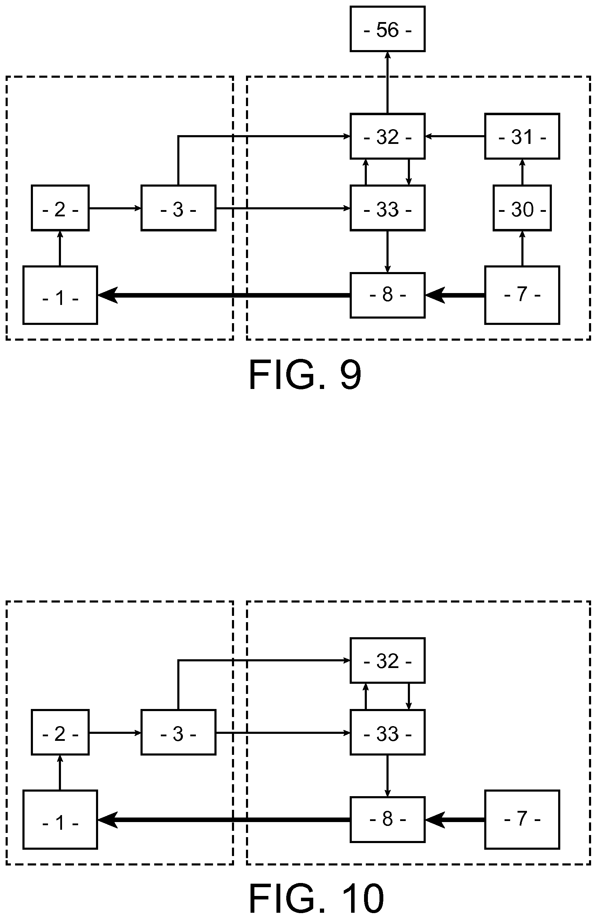

Une réalisation de l'invention va maintenant être décrite au moyen de la figure 9. Le dispositif comprend encore le réservoir de moteur 1, la sonde 2, l'unité d'acquisition 3 et l'unité de demande de correction 4 connus, et le réservoir de moteur 1 est encore alimenté par le réservoir d'avion 7 au moyen du système d'alimentation 5. Le réservoir d'avion 7 est toutefois muni d'une sonde 30 de niveau d'huile pouvant être semblable à la sonde 2, et qui délivre donc un signal à une unité d'acquisition 31 semblable à l'unité d'acquisition 3. Les signaux des unités d'acquisition 3 et 31 sont tous deux fournis à une unité de détection d'erreur 32 qui gouverne une unité de commande 33 de la pompe 8. Le fonctionnement de l'invention est le suivant : chaque dose d'huile fournie par le réservoir d'avion 7 doit atteindre le réservoir de moteur 1 après un court délai. Les sondes 2 et 30 permettent de mesurer les variations des niveaux d'huile provoquées par les doses extraites du réservoir d'avion 7 et les doses, normalement identiques, parvenant au réservoir de moteur 1. L'unité de détection d'erreur 32 estime ces doses à partir des mesures faites par les sondes 2 et 30 et les compare. Si une des sondes 2 et 30 fonctionne mal et qu'une perturbation du genre de celles de la figure 8 apparaît, les estimations de doses sont différentes. Si un seuil de discordance des estimations est atteint, il est possible de signaler un défaut d'alimentation en activant un dispositif d'avertissement ou d'alarme 56 aboutissant au poste de pilotage de l'avion 51 et déclenché par l'unité de détection d'erreur 32. On sera ainsi averti du risque d'un mauvais remplissage, ce qui permettra de prendre les mesures d'entretien nécessaires dès après la fin du vol.

Une discordance des estimations sera aussi identifiée avec d'autres défauts du dispositif, comme une fuite d'huile hors du conduit d'alimentation 10.

Une conception un peu différente est donnée à la figure 10, et qui diffère de la précédente en ce que la deuxième sonde 30 et son unité d'acquisition 31 sont absentes. La commande d'alimentation s'effectue alors par des impulsions, pouvant être appliquées manuellement par un opérateur, pour déclencher à chacune d'elles un fonctionnement temporaire et de durée invariable de la pompe 8, supposé délivrer une dose de quantité connue et également invariable d'huile à chacune des impulsions dans le réservoir de moteur 1. La comparaison faite par l'unité de détection d'erreur 32 porte alors sur des estimations du volume d'huile reçu par le réservoir de moteur 1 d'après les variations de niveau indiquées par la sonde 2 et du volume extrait du réservoir d'avion 7 d'après le nombre d'impulsions, que l'unité de commande 33 communique à l'unité de détection d'erreur 32. Si un désaccord dépassant un seuil apparaît entre les deux estimations, on en déduit encore un défaut de dispositif, et l'alarme peut être donnée comme précédemment.

Le dispositif conforme à l'invention peut être réalisé sous des formes différentes de celles qu'on a indiquées. En particulier, les équipements électroniques peuvent appartenir à un calculateur unique ou à des calculateurs différents.

Ou encore, la seconde sonde 30 pourrait être remplacée, par exemple, par un débitmètre 57 installé sur le conduit d'alimentation 10 menant du réservoir d'avion 7 au réservoir de moteur 1, et qui mesurerait le débit d'huile quittant le réservoir d'avion 7. Les comparaisons seraient menées comme précédemment, les mesures du débitmètre 57 étant transmises à l'unité d'acquisition 31 déjà rencontrée.

## EP 3 707 350 B1

### Revendications

1. Dispositif pour un moteur d'aéronef comprenant un premier réservoir (1) d'huile adjacent à un moteur (12) de propulsion de l'aéronef, un second réservoir (7) d'huile distinct du moteur, un système d'alimentation (5) du premier réservoir (1) par de l'huile extraite du second réservoir, une première sonde (2) de niveau d'huile dans le premier réservoir, une unité de commande (4) du système d'alimentation, sensible à des mesures de la première sonde, **caractérisé en ce qu'**il comprend une unité d'estimation et de comparaison (32) de doses d'huile extraites du second réservoir et de doses d'huile reçues par le premier réservoir.

2. Dispositif selon la revendication 1, **caractérisé en ce qu'**il comprend une seconde sonde (30) de niveau d'huile, dans le second réservoir (7), et l'unité d'estimation et de comparaison (32) est renseignée par des unités d'acquisition (3, 31) de mesures des sondes (2, 30).

3. Dispositif selon la revendication 2, **caractérisé en ce que** la première sonde (2) et la seconde sonde (30) sont des sondes à flotteur magnétique (26) et à rangée d'interrupteurs (15) se succédant le long d'une rangée verticale de mouvement des flotteurs.

4. Dispositif selon la revendication 1, **caractérisé en ce qu'**il comprend un débitmètre (57) sur un conduit d'alimentation (10) menant du second réservoir (7) au premier réservoir (1), et l'unité d'estimation et de comparaison (32) est renseignée par des unités d'acquisition (3, 31) de mesures de la première sonde (2) et du débitmètre (57).

5. Dispositif selon la revendication 1, **caractérisé en ce que** l'unité d'estimation et de comparaison (32) est renseignée par l'unité de commande (33) du système d'alimentation, d'après une durée de fonctionnement du système d'alimentation (5).

6. Dispositif selon l'une quelconque des revendications précédentes, **caractérisé par** un moyen d'alerte, déclenché par l'unité d'estimation et de comparaison (32), quand une discordance entre les estimations de dose reçues par le premier réservoir et les estimations de dose extraites du second réservoir dépasse un seuil.

7. Aéronef, **caractérisé en ce qu'**il comprend le dispositif selon l'une quelconque des revendications précédentes.

8. Aéronef selon la revendication 7, **caractérisé en ce que** le second réservoir (7) est unique et placé dans une carlingue de l'aéronef, et le premier réservoir (1) et le système d'alimentation (5) sont à plusieurs exemplaires sur des côtés opposés de l'aéronef.

### Patentansprüche

1. Vorrichtung für einen Flugzeugmotor mit einem ersten Öltank (1) angrenzend an einen Antriebsmotor (12) des Flugzeugs, einem von dem Motor getrennten, zweiten Öltank (7), einem Versorgungssystem (5) des ersten Tanks (1) durch das aus dem zweiten Tank entnommene Öl, einem ersten Ölstand-Fühler (2) in dem ersten Tank, einer Steuereinheit (4) des Versorgungssystems, die auf die Messungen des ersten Fühlers anspricht, **dadurch gekennzeichnet, dass** sie eine Schätz- und Vergleichseinheit (32) der aus dem zweiten Tank entnommenen Ölmengen und der durch den ersten Tank aufgenommenen Ölmengen aufweist.

2. Vorrichtung nach Anspruch 1, **dadurch gekennzeichnet, dass** sie einen zweiten Ölstand-Fühler (30) in dem zweiten Tank (7) aufweist und die Schätz- und Vergleichseinheit (32) durch Erfassungseinheiten (3, 31) über Messungen der Fühler (2, 30) informiert wird.

3. Vorrichtung nach Anspruch 2, **dadurch gekennzeichnet, dass** der erste Fühler (2) und der zweite Fühler (30) Magnetschwimmerfühler (26) mit einer Reihe von Schaltern (15) sind, die entlang einer senkrechten Reihe der Schwimmerbewegung aufeinander folgen.

4. Vorrichtung nach Anspruch 1, **dadurch gekennzeichnet, dass** sie einen Durchflussmesser (57) auf einer Versorgungsleitung (10) aufweist, die von dem zweiten Tank (7) zu dem ersten Tank (1) führt, und die Schätz- und Vergleichseinheit (32) durch Erfassungseinheiten (3, 31) über Messungen des ersten Fühlers (2) und des Durchflussmessers (57) informiert wird.

**5.** Vorrichtung nach Anspruch 1, **dadurch gekennzeichnet, dass** die Schätz- und Vergleichseinheit (32) durch die Steuereinheit (33) anhand einer Betriebszeit des Versorgungssystems (5) über das Versorgungssystem informiert wird.

**6.** Vorrichtung nach einem der vorhergehenden Ansprüche, **gekennzeichnet durch** eine Alarmeinrichtung, die durch die Schätz- und Vergleichseinheit (32) ausgelöst wird, wenn eine Abweichung zwischen der geschätzten, von dem ersten Tank aufgenommenen Menge und der geschätzten, von dem zweiten Tank abgegebenen Menge eine Schwelle überschreitet.

**7.** Flugzeug, **dadurch gekennzeichnet, dass** es die Vorrichtung nach einem der vorhergehenden Ansprüche aufweist.

**8.** Flugzeug nach Anspruch 7, **dadurch gekennzeichnet, dass** der zweite Tank (7) alleine vorhanden ist und sich in einem Flugzeugcockpit befindet, und der erste Tank (1) sowie das Versorgungssystem (5) in mehrfacher Ausfertigung auf gegenüberliegenden Seiten des Flugzeugs angeordnet sind.


**Claims**

**1.** Device for an aircraft engine comprising a first oil tank (1) adjacent to a propulsion engine (12) of the aircraft a second oil tank (7) separate from the engine, a system for supplying (5) the first tank (1) with oil extracted from the second tank, a first sensor (2) of the oil level in the first tank, a unit (4) for controlling the supply system, sensitive to measurements from the first sensor, **characterised in that** it comprises a unit (32) for estimating and comparing doses of oil extracted from the second tank and doses of oil received by the first tank.

**2.** Device according to claim 1, **characterised in that** it comprises a second sensor (30) of the oil level, in the second tank (7), and the unit (32) for estimating and comparing is informed by units for acquiring (3, 31) measurements from sensors (2, 30).

**3.** Device according to claim 2, **characterised in that** the first sensor (2) and the second sensor (30) are sensors with a magnetic float (26) and with a row of switches (15) succeeding one another along a vertical row of float movement.

**4.** Device according to claim 1, **characterised in that** it comprises a flowmeter (57) on a supply duct (10) leading from the second tank (7) to the first tank (1), and the unit (32) for estimating and comparing is informed by units for acquiring (3, 31) measurements from the first sensor (2) and from the flowmeter (57).

**5.** Device according to claim 1, **characterised in that** the unit (32) for estimating and comparing is informed by the control unit (33) of the supply system, according to a duration of operation of the supply system (5).

**6.** Device according to any preceding claim, **characterised by** an alerting means, triggered by the unit (32) for estimating and comparing, when an inconsistency between the estimations of the doses received by the first tank and the estimations of the doses extracted from the second tank exceeds a threshold.

**7.** Aircraft, **characterised in that** it comprises the device according to any preceding claim.

**8.** Aircraft according to claim 7, **characterised in that** the second tank (7) is singular and placed in a fuselage of the aircraft, and the first tank and the supply system are in several copies at opposite sides of the aircraft.

FIG. 1

FIG. 2

FIG. 3

FIG. 4

FIG. 5

FIG. 6

FIG. 7

FIG. 8

FIG. 9

FIG. 10

**EP 3 707 350 B1**

## RÉFÉRENCES CITÉES DANS LA DESCRIPTION

**Documents brevets cités dans la description**

- FR 3013330 A

- FR 3020093 A1